# EUROPEAN PATENT SPECIFICATION

(11) **EP 0 385 696 B1**
(45) Date of publication and mention of the grant of the patent: **04.05.1994**
(21) Application number: 90302026.1
(22) Date of filing: 28.02.1990
(51) Int. Cl.: G11B 5/54

(54) **Disk drive with an actuator locking system**
Plattengerät mit einem Armverriegelungssystem
Entraînement de disque avec système pour fermer l'organe de manoeuvre

(30) Priority: 28.02.1989 JP 45496/89
(43) Date of publication of application: 05.09.1990
(73) Proprietor: International Business Machines Corporation, Armonk, N.Y. 10504 (US)
(72) Inventor: Kubo, Masakazu, Atsugi-shi, Kanagawa-ken (JP); Masuda, Yoshimi, Yokohama-shi, Kanagawa-ken (JP); Nakagawa, Yuhzoh, Hiratsuka-shi, Kanagawa-ken (JP)
(74) Representative: Moss, Robert Douglas

(56) References cited:
- EP-A- 0 107 853
- US-A- 4 647 997
- US-A- 4 833 550

## Description

### Field of the invention

This invention relates to disk drives with an actuator locking system.

### Background of the invention

It is common in magnetic disk drives to have a landing region on the disk or disks that is separate from the data recording region. When power to the disk drive is switched off, the read/write head is moved to and retained in this landing area, helping to safeguard the data stored on the disk. The actuator which supports the head is then locked so that the head cannot stray into the data recording area, even in the event of an external shock or vibration.

US-A- 4647997 discloses a disk drive according to the preamble of Claim 1, including an actuator locking system having a rotatable vane, a latch finger coupled to the vane, and a spring. The vane is positioned so as to receive air flow caused by the rotation of the disk, whilst the spring biases the vane in a direction opposite to the force of the air flow pressure. When the air flow is strong enough to move the vane against the bias force of the spring, the latch finger is disengaged from a notch in the actuator, thereby allowing the actuator to move the head across the data recording region of the disk. When disk stops rotating, the air flow is no longer strong enough to hold the vane against the bias force of the spring and with the head returned to the landing area, the latch finger engages the notch, locking the actuator and the head in place.

To ensure correct disengagement of the latch finger from the actuator on power-up, the actuator locking system disclosed in US-A- 4647997 has an extra disk for producing sufficient air flow against the vane, this disk being in addition to the data storage disk. However, this extra disk represents an undesirable overhead on the size and weight of the disk file.

### Disclosure of the invention

Accordingly, the invention provides for a disk drive including at least one data storage disk mounted on a spindle for rotation, an actuator mounted for rotation, the actuator supporting a head for movement over the disk for data transfer therewith, motor means for rotating the disk, and switching and controlling means for the motor means; the disk drive further including an actuator locking system which allows the actuator to be in a locked or unlocked state, the actuator locking system comprising a bias means that urges the actuator into the locked state, and a vane positioned so as to receive air flow generated by the rotation of the disk so that the pressure on the vane due to said air flow urges the actuator into the unlocked state; the disk drive being characterised in that said switching and controlling means is adapted to ensure that after power-on, the rotation speed of the disk increases to a first specified rotation speed, such that the pressure on the vane due to air flow generated by the rotation of the disk at the first predetermined speed is sufficient to force the actuator into the unlocked state, and after a predetermined criterion has been satisfied, decreases to a second specified rotation speed such that data transfer can commence.

The initial high rotation speed of the disks after power-on produces an increased force of air flow due to the faster disk rotation, thereby ensuring that the actuator is unlocked. Because no special mechanical parts are required, the thickness and weight of the disk drive are not increased. Therefore the use of a high initial rotation speed allows for a smaller simpler disk drive. The benefits of the invention apply whether or not the spindle itself rotates along with disks (disk drives with both stationary and rotatable spindles are well-known in the art).

Preferably, the predetermined criterion is that a predetermined time has elapsed since the power-on of the disk drive, although other criteria such as that a predetermined speed has been obtained or that some movement of latch has been sensed could also be used. When a predetermined time is used for establishing the criterion, the switching and controlling means preferably includes timer means for receiving a start-up signal generated in response to the power-on of the disk drive and for generating a set time elapsed signal a predetermined time after receipt of the start-up signal; speed mode switching means for receiving the start-up signal and subsequently the set time elapsed signal, and for outputting a high-speed mode signal after receipt of the start-up signal until receipt of the set time elapsed signal, and a low-speed mode signal after receipt of the set time elapsed signal; and speed control means, for receiving the high-speed or low-speed mode signal from the speed mode switching means, and for adjusting the rotation speed of the motor means and hence the disk in accordance with whether the high-speed or said low-speed mode signal is being received. The speed mode switching means and the timer means can be implemented in the hardware and software of a microprocessor, or else separate electrical circuits may be provided.

It is preferred that the disk has a landing region separate from the data storage region, such that when the actuator is in the locked state, the head is located in the landing region. This minimises the possibility of accidental loss of data from the disk.

The second specified rotation speed is the operating rotation speed at which data transfer between the head and the disk occurs. The first specified speed and the predetermined criterion are set so as to ensure release of the actuator lock. Essentially, the first specified speed is set at a disk rotation rate sufficient to ensure that the air flow pressure on the vane releases the actuator lock, whilst the predetermined criterion ensures that the actuator has indeed been unlocked. For example, if the predetermined criterion is that a predetermined time must have elapsed since power-on, then this predetermined time must be long enough for the disk rotation rate to increase from zero at power on, when the disk is stationary, to the first specified speed. After the actuator lock has been released, the disk drive can be slowed to the second specified speed and read/write operations commence. In one preferred embodiment, the first specified rotation speed is 4200 rpm and the second specified rotation speed is 3600 rpm. The predetermined time is about 4.5 seconds, with the disk reaching the first specified speed after about 4 seconds. For this particular disk drive, rotation at 4200 rpm for an additional 0.5 seconds ensures release of the actuator lock.

The advantages of the present invention are applicable to any disk drive in which the actuator lock is released by air flow, including not only magnetic disk drives, but also such devices as magneto-optical and optical disk drives.

The invention also provides a method for unlocking an actuator in a disk drive including at least one data storage disk mounted on a spindle for rotation, an actuator mounted for rotation, the actuator supporting a head for movement over the disk for data transfer therewith, motor means for rotating the disk; the disk drive further including an actuator locking system which allows the actuator to be in a locked or unlocked state, the actuator locking system comprising a bias means that urges the actuator into the locked state, and a vane positioned so as to receive air flow generated by the rotation of the disk so that the pressure on the vane due to the air flow urges the actuator into the unlocked state; the method for unlocking the actuator comprising the following steps:
a) after power-on of the disk drive, increasing the rotation speed of the disk to a first specified rotation speed such that the pressure on the vane due to air flow generated by the rotation of the disk is sufficient to force the actuator into the unlocked state;
b) determining that a predetermined criterion has been satisfied, the criterion effectively ensuring that the actuator is in the unlocked state;
c) reducing the rotation speed of the disk to a second specified rotation speed such that the data transfer can commence.

### Brief Description of the Drawings

Fig. 1 is a plan view of a magnetic hard disk drive according to the invention, showing the actuator locked with the head located in the landing region;
Fig. 2 is a plan view of the magnetic hard disk drive of Fig. 1, but with the actuator unlocked and the head located over the data recording region;
Fig. 3 is a block diagram of the motor switching and controlling means used in the disk drive of Fig. 1; and
Fig. 4 is a graph showing the change with time of the rotation speed of the spindle motor during operation of the disk drive of Fig. 1.

### Description

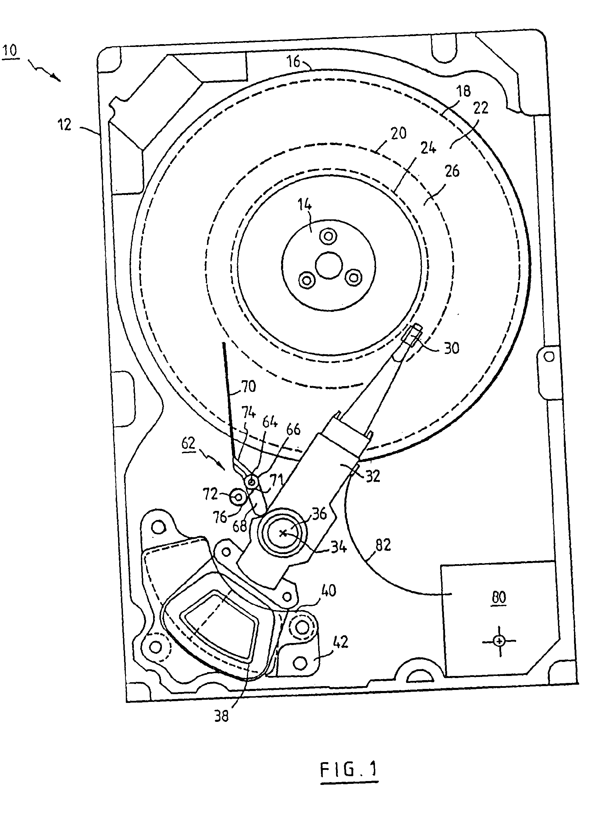

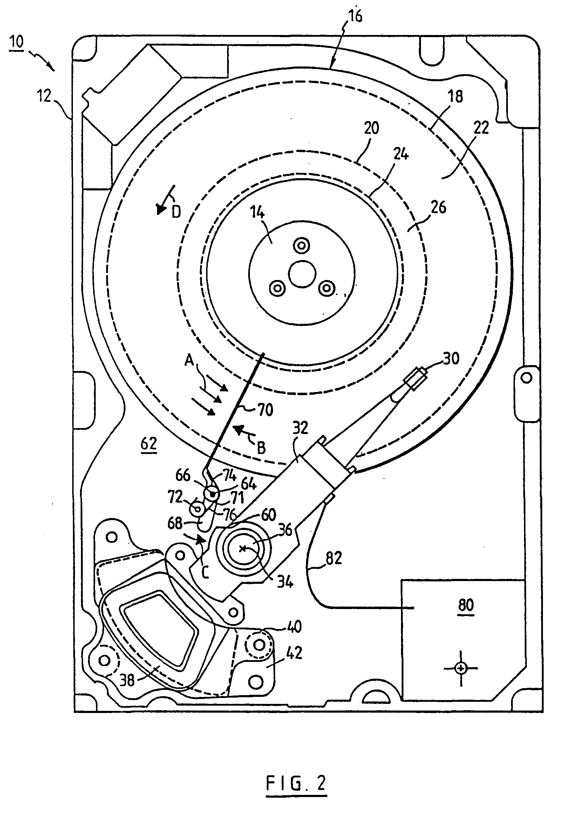

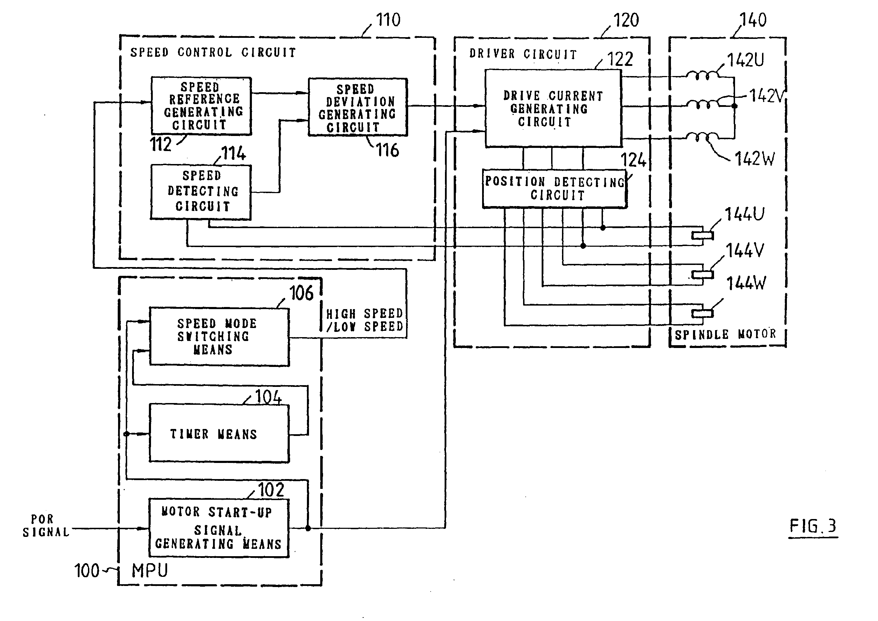

Figs. 1 and 2 show a magnetic hard disk drive 10 including a base 12. Attached to the base 12 is a three-phase a.c. spindle motor 140 (not shown in Figs. 1 and 2, but included schematically in Fig. 3). A magnetic rigid disk 16 is driven by the spindle motor 140 through a spindle 14. The disk 16 has a data recording area 22 between a concentric circle 18 and a concentric circle 20, and has a landing area 26 between a concentric circle 20 and a concentric circle 24 located radially inwards of the data recording region.

A magnetic head 30 for transferring data to and from the disk 16 is supported by one end of an actuator 32. The actuator 32 is attached to the base 12 through a shaft 36 and is rotatable about an axis 34. A coil 38 is fixed to the end of the actuator 32 opposite the head 30, relative to the axis 34. An upper yolk 40 and a lower yolk 42 are fixed to the base 12 at specified distances above and below the coil 38 respectively. Permanent magnets (not shown) are attached to the sides of both the upper yolk 38 and the lower yolk 42 facing the coil 38. The coil 38 and the permanent magnets constitute a voice coil motor, with the current flowing in the coil 38 and the magnetic field of the permanent magnets combining to produce a force to move the actuator 32. The direction of actuator motion depends on the direction of the current flowing through the coil 38.

The actuator locking system comprises essentially a notch 60 in the side of the actuator 32 roughly facing the disk 16, a latch 62 which cooperates with the notch 60 to hold the actuator 32 with the head 30 in the landing area 26, and a coil spring 71. The latch 62 is attached to the base 12 through a shaft 66, and is rotatable about an axis 64. The latch 62 has a lock member 68 on one side of the axis 64 that is coupled to a vane 70 on the other side of the axis 64. The vane 70 receives an air flow in the direction of arrow A caused by the rotation of the disk 16 in the direction of arrow D. A column 72 adjacent to the shaft 66 supports the coil spring 71, which is wrapped around the shaft 66, with one end 74 attached to the vane 70 and the other end 76 attached to the column 72. The coil spring 71 gives the latch 62 a bias force which moves the vane in the direction of arrow B - i.e. opposite to the direction of the air flow pressure of arrow A. When the rotation of the disk 16 slows down or stops, the air flow in the direction of arrow A is not strong enough to support the vane 70 against the bias force of the spring 71. The locking member 68 therefore swings in the direction of arrow C due to the bias force of the coil spring 71, and engages the notch 60 of the actuator 32. The actuator 32 is thereby locked, with the head positioned in the landing area 26.

To ensure that the actuator does indeed return the head to the landing area when power is disconnected from the spindle motor, a switch (not shown) connects the actuator driving coil 38 with the spindle motor 140. The spindle motor 140 rotates by inertia for a while, producing a counter-electromotive force. This counter-electromotive force causes a current to flow in the voice coil 38 thereby rotating the actuator 32 to the inner part of the disk 16. This allows the head supported on the end portion of the actuator 32 to move towards the landing area 26 of the disk 16.

However, the counter-electromotive force decreases rapidly as the rotation speed of the spindle motor 140 falls, so that the head 30 cannot be made to reach the landing area 26 using the counter-electromotive force alone. Therefore, a flexible cable 82 extending from an electric circuit board 80 on the base 12 to the actuator 32 is used to bias the actuator. The flexible cable is arranged so that its curvature diminishes as the actuator 32 moves the head 30 towards the landing region 26. When the spindle motor 140 has almost stopped, the air flow pushing the vane 70 becomes very weak, and the head 30 can be returned to the landing region. The locking member 68 is then engaged with the notch 60 of the actuator 32 by the force of the coil spring 76, locking the actuator with the head in the landing region.

Cooperating with the actuator locking system is the switching and controlling means for the spindle motor 140 rotation speed shown in Figure 3, which comprises a microprocessor (MPU) 100, a speed control circuit 110, and a driver circuit 120. The MPU produces a motor start-up signal in response to a power-on reset (POR) signal resulting from a power-on, and outputs a high-speed mode signal or a low-speed mode signal. The speed control circuit 110 detects the actual rotation speed of the spindle motor 140 and calculates the deviation of the actual speed from the reference signal speed determined by the high-speed or low-speed mode signal. The driver circuit 120 starts the supply of current to the driving windings of the spindle motor 140 upon receipt of the motor start-up signal, and supplies current to the driving windings dependent on the measured deviation of the actual speed from the speed reference signal, thereby controlling the actual rotation speed of the spindle motor 140 relative to that indicated by the speed reference signal.

The MPU 100 includes a motor start-up signal generating means 102, a timer means 104 and a speed mode switching means 106, implemented by a combination of the hardware and software of the MPU 100. The motor start-up signal generating means 102 generates a motor start-up signal in response to the POR signal produced by a power-on. The timer means 104 outputs a set time elapsed signal after a predetermined time. For this particular disk drive, the set time elapsed signal occurs 4.5s after receipt of the motor start-up signal. The speed mode switching means 106 outputs the high-speed mode signal after receipt of the motor start-up signal but before receipt of the set time elapsed signal, and outputs the low-speed mode signal after receipt of the set time elapsed signal. The high-speed mode signal outputted by the speed mode switching means 106 is a logical "1" signal or a high-level signal, and the low-speed mode signal is a logical "0" signal or a low-level signal.

The speed corresponding to the low-speed mode signal from the speed mode switching means 106 is the rotation speed of the spindle motor 140 at which data transfer between the head 30 and the disk 16 occurs. The speed corresponding to the high-speed mode signal from the speed mode switching means 106 is the rotation speed of the spindle motor 140 at which sufficient air flow is produced by the disk to move the vane 70 against the bias force of the coil spring 71, thereby disengaging the locking member 68 from the notch 60 of the actuator 32. For this particular disk drive the low-speed mode corresponds to 3600 rpm, whilst the high-speed mode corresponds to 4200 rpm. It was determined that a spindle motor rotation speed of 4200 rpm would disengage the locking member 68 from the notch 60, even if a coil spring 71 having a spring force of 1.2 gmm was used. However, if the spring force of the coil spring 76 were larger still, it would be necessary to increase the speed corresponding to the high-speed mode signal.

The speed control circuit 110 consists of a speed reference generating circuit 112, a speed detecting circuit 114, and a speed deviation generating circuit 116. The speed reference generating circuit 112 has a reference clock oscillator, and a frequency divider with a frequency dividing ratio that changes in accordance with the output from the speed mode switching means 106, or in other words, according to whether a high-speed mode signal or a low-speed mode signal is indicated. A speed reference signal is produced comprising a pulse train with a frequency corresponding to either 4200 rpm for the high-speed mode signal, or 3600 rpm for the low-speed mode signal.

The speed detecting circuit 114 receives the output from position sensor 144U, which is one of three position sensors 144U, 144V and 144W corresponding to the U-phase, the V-phase, and the W-phase of the spindle motor 140 respectively. Position sensor 144U outputs pulses in response to the rotation of the motor 140, so that circuit 114 can determine the rotation speed of the motor 140. The speed detecting signal produced by the speed detecting circuit 114 is a pulse train whose frequency represents the actual rotation speed of the motor 140. The speed deviation generating circuit 116 receives both the speed reference signal and the speed detecting signal, and outputs a voltage signal representing the frequency difference between these two signals.

The driver circuit 120 comprises a drive current generating circuit 122 and a position detecting circuit 124. The drive current generating circuit 122 starts the current supply to the driving windings 142U, 142V and 142W (corresponding again to the U, V and W phases of the motor respectively) upon receipt of the motor start-up signal, and subsequently supplies the windings with a current determined by the output of the speed deviation generating circuit 116. The position detecting circuit 124 receives the outputs of the position sensors 144U, 144V and 144W in the spindle motor 140. These specify to which winding (142U, 142V or 142W) the drive current generating circuit 122 current is to be supplied.

The speed control circuit 110 and the driver circuit 120 may be implemented, for example, using integrated circuits TC9203 and TA7736 respectively, both from the Toshiba Corporation.

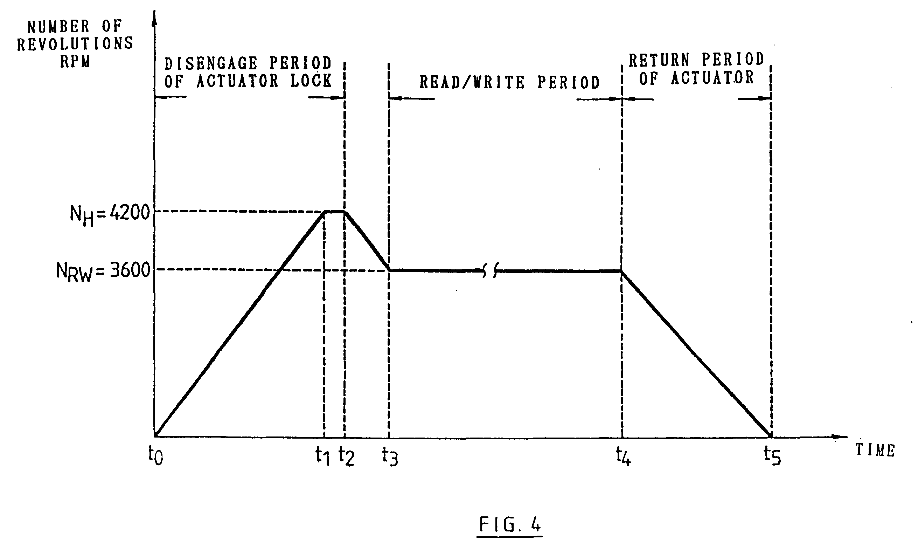

Fig. 4 shows the change with time of the rotation speed of the spindle motor 140 produced by the motor switching and controlling means of Fig. 3. Initially, before time t₀, the power is off and, as shown in Fig. 1, the locking member 68 is engaged in the notch 60, locking the actuator 32 and holding the head 30 in the landing area 26. When the power is turned on at time t₀, the motor start-up signal generating means 102 outputs the motor start-up signal to the timer means 104, the speed mode switching means 106 and the drive current generating circuit 122.

Upon receipt of the motor start-up signal, the speed mode switching means 106 outputs the high-speed mode signal to the speed reference generating circuit 112. In response to this, the speed reference generating circuit 112 outputs the speed reference signal appropriate to the high rotation speed (N_{H}) of 4200 rpm. The speed detecting circuit 114 finds a zero rotation speed (i.e. a stationary disk). The speed deviation generating circuit 116 produces a voltage signal representing the difference between the speed detection signal and the speed reference signal, and then in response to this, the drive current generating circuit 122 supplies an appropriate current to the driving windings to increase the spindle motor 140 rotation speed to the desired value of N_{H} = 4200 rpm.

A time t₁ = 4.0s after time t₀, the spindle motor 140 reaches a rotation speed of N_{H} = 4200 rpm. The air flow in the direction of arrow A due to the disk rotation at this high speed moves the vane 70, thereby allowing the locking member 68 to disengage from the notch 60 of the actuator 32, and so free the actuator 32.

After an elapsed time of 4.5s from time t₀ (i.e. at time t₂), the timer means 104 outputs a set time elapsed signal to the speed mode switching means 106. In response to this, the output of the speed mode switching means 106 changes from the high-speed mode signal to the low-speed mode signal. The speed reference generating circuit 112, upon receipt of the low-speed mode signal, produces a speed reference signal indicating the lower rotation speed (N_{RW}) of 3600 rpm, the speed at which the head 30 transfers data to and from the disk 16, whereas the speed detecting circuit 114 measures a rotation speed of 4200 rpm. Therefore, the speed deviation generating circuit 116 outputs a voltage signal representing this deviation of to the drive current generating circuit 122, which supplies current to the driving windings 142U, 142V and 142W causing the speed of the spindle motor 140 to decrease to N_{RW} = 3600 rpm. At time t₃, the rotation speed of the spindle motor 140 reaches N_{RW}, and data transfer to and from the disk can commence.

The 4.5s set time of the timer means 104 (= t₂ - t₀) is the time required for the spindle motor 140 to rise to a rotation speed of 4200 rpm, plus the time for which the spindle motor 140 actually rotates at 4200 rpm. The rise time to 4200 rpm (i.e. from t₀ to t₁) equals about 4.0s, with the remaining 0.5s from t₁ to t₂ spent rotating at 4200 rpm.

After data transfer with the disk has been completed, at time t₄, the power is turned off, the rotation speed of the spindle motor declines, and the actuator returns the head 30 to the landing region 26. The spindle motor finally comes to a halt at time t₅, and the locking member engages the notch to hold the actuator firmly in place with the head in the landing region.

Although for this particular disk drive the high-speed rotation rate following power-on was set at 4200 rpm, this clearly depends on the force both of the coil spring and of the air flow pressure on the vane 70. Experiments by the inventors investigated the variation with rotation speed of the force of the air flow experienced by the vane 70, and it was found than in each of the cases given below, the listed initial high rotation speed was sufficient to release the latch for the coil spring force shown.

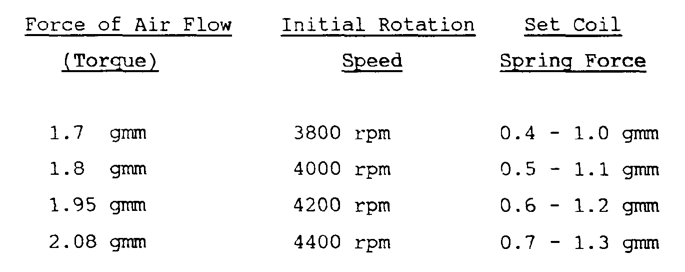

## Claims

1. A disk drive (10) including at least one data storage disk (16) mounted on a spindle (14) for rotation, an actuator (32) mounted for rotation, said actuator supporting a head (32) for movement over said disk for data transfer therewith, motor means (140) for rotating said disk, and switching and controlling means (100, 110) for said motor means;
said disk drive further including an actuator locking system (60,62) which allows said actuator to be in a locked or unlocked state, said actuator locking system comprising a bias means (71) that urges said actuator into said locked state, and a vane (70) positioned so as to receive air flow generated by the rotation of said disk (16) so that the pressure on said vane due to said air flow urges said actuator into said unlocked state;
said disk drive being characterised in that:
said switching and controlling means (100, 110) is adapted to ensure that after power-on of said disk drive, the rotation speed of said disk increases to a first specified rotation speed such that the pressure on said vane (70) due to air flow generated by the rotation of said disk (16) at said first specified speed is sufficient to force said actuator (32) into said unlocked state, and after a predetermined criterion has been satisfied decreases to a second specified rotation speed such that said data transfer can commence.

2. A disk drive as claimed in claim 1, wherein said predetermined criterion is that a predetermined time has elapsed since said power-on of the disk drive.

3. A disk drive as claimed in claim 2, wherein said switching and controlling means includes:
timer means (104) for receiving a start-up signal generated in response to the power-on of sad disk drive, and for generating a set time elapsed signal a predetermined time after receipt of said start-up signal;
speed mode switching means (106) for receiving said start-up signal and subsequently said set time elapsed signal, and for outputting a high-speed mode signal after receipt of said start-up signal until receipt of said set time elapsed signal, and for outputting a low-speed mode signal after receipt of said set time elapsed signal; and
speed control means (110), for receiving said high-speed or low-speed mode signal from said speed mode switching means, and for adjusting the rotation speed of said motor means and hence said disk in accordance with whether said high-speed or said low-speed mode signal is being received.

4. A disk drive as claimed in claim 3, wherein said predetermined time is approximately 4.5 seconds after power-on of said disk drive.

5. A disk drive as claimed in any preceding claim, wherein said actuator locking system further comprises a notch (60) in said actuator and a latch (68), said latch engaging said notch to lock said actuator, and being mechanically coupled to said vane (70) so that the pressure of air flow on said vane due to the disk rotation vane tends to disengage said latch from said notch, thereby unlocking said actuator.

6. A disk drive as claimed in any preceding claim, wherein said bias means is a coil spring (71).

7. A disk drive as claimed in any preceding claim, wherein said disk has a landing region (26) separate from the data storage region (22), and wherein when said actuator is in said locked state, said head is located in said landing region.

8. A method for unlocking an actuator in a disk drive (10) including at least one data stage disk (16) mounted on a spindle (14) for rotation, an actuator (32) mounted for rotation, said actuator supporting a head (32) for movement over said disk for data transfer therewith, motor means (140) for rotating said disk;
said disk drive further including an actuator locking system (60, 62) which allows said actuator to be in a locked or unlocked state, said actuator locking system comprising a bias means (71) that urges said actuator into said locked state, and a vane (70) positioned so as to receive air flow generated by the rotation of said disk so that the pressure on said vane due to said air flow urges said actuator into said unlocked state;
said method for unlocking said actuator comprising the following steps:
a) after power-on of said disk drive, increasing the rotation speed of said disk to a first specified rotation speed such that the pressure on said vane due to air flow generated by the rotation of said disk is sufficient to force said actuator into said unlocked state;
b) determining that a predetermined criterion has been satisfied, said criterion effectively ensuring that said actuator is in said unlocked state;
c) reducing the rotation speed of said disk to a second specified rotation speed such that said data transfer can commence.

9. A method for unlocking an actuator as claimed in claim 8, wherein said predetermined criterion is that a predetermined time has elapsed since said power-on of said disk drive.

## Patentansprüche

1. Ein Plattenlaufwerk (10), mindestens eine Datenspeicher platte (16) umfassend, welche drehbar auf einer Spindel (14) montiert ist, einen Arm (32), der drehbar montiert ist, wobei der genannte Arm einen Magnetkopf (30) trägt, der sich für den Datentransfer über die genannte Platte bewegt, ein Motormittel (140) zum Drehen der genannten Platte und Schalt- und Regelmittel (100, 110) für das genannte Motormittel;
der genannte Plattenantrieb umfaßt desweiteren ein Armverriegelungssystem (60, 62), welches dem genannten Arm ermöglicht, sich in einem verriegelten oder in einem unverriegelten Zustand zu befinden, wobei das genannte Armverriegelungssystem ein Vorspannmittel (71) umfaßt, welches den genannten Arm in den genannten verriegelten Zustand zwingt, und einen Flügel (70), der so positioniert ist, daß der durch die Drehung der genannten Platte (16) erzeugte Luftstrom auf ihn auftrifft, so daß der Druck des genannten Luftstroms auf den genannten Flügel den genannten Arm in den genannten nicht verriegelten Zustand zwingt;
das genannte Plattenlaufwerk ist dadurch gekennzeichnet, daß:
die genannten Schalt- und Regelmittel (100, 110) gewährleisten, daß nach dem Einschalten des genannten Plattenlaufwerks die Umdrehungszahl der genannten Platte bis auf eine erste vorgeschriebene Drehzahl ansteigt, so daß der Druck des Luftstroms auf den genannten Flügel (70), der durch die Umdrehung der genannten Platte (16) mit der genannten ersten vorgeschriebenen Drehzahl erzeugt wird, ausreicht, um den genannten Arm (32) in den genannten nicht verriegelten Zustand zu zwingen, und, nachdem ein vorbestimmtes Kriterium erfüllt wurde, bis auf eine zweite vorgeschriebene Drehzahl abnimmt, so daß der genannte Datentransfer beginnen kann.

2. Ein Plattenlaufwerk nach Anspruch 1, in dem das genannte vorbestimmte Kriterium darin besteht, daß eine vorbestimmte Zeit seit dem genannten Einschalten des Plattenlaufwerks vergangen ist.

3. Ein Plattenlaufwerk nach Anspruch 2, in dem das genannte Schalt- und Regelmittel folgendes umfaßt:
ein Zeitgebermittel (104) für den Empfang eines Anfahrsignals, das in Antwort auf das Einschalten des genannten Plattenlaufwerks erzeugt wurde, und, eine vorbestimmte Zeit nach Empfang des genannten Anfahrsignals, zum Erzeugen eines Signals "festgesetzte Zeit abgelaufen";
Drehzahlmodus-Schaltmittel (106) für den Empfang des genannten Anfahrsignals und danach des genannten Signals "festgesetzte Zeit ablgeaufen" und zum Ausgeben eines Signals "Modus mit hoher Drehzahl" nach dem Empfang des genannten Anfahrsignals, bis zum Empfang des genannten Signals "festgesetzte Zeit abgelaufen", und zum Ausgeben eines Signals "Modus mit niedriger Drehzahl" nach Empfang des genannten Signals "festgesetzte Zeit abgelaufen"; und
Drehzahl-Regelmittel (110) zum Empfang des genannten Signals "Modus mit hoher Drehzahl" oder "Modus mit niedriger Drehzahl" vom genannten Drehzahlmodus-Schaltmittel, und zum Anpassen der Umdrehungszahl des genannten Motormittels und damit der genannten Platte abhängig davon, ob das genannte Signal "Modus mit hoher Drehzahl" oder das genannte Signal "Modus mit niedriger Drehzahl" empfangen wird.

4. Ein Plattenlaufwerk nach Anspruch 3, bei dem die genannte vorbestimmte Zeit etwa 4,5 Sekunden nach dem Einschalten des genannten Plattenlaufwerks liegt.

5. Ein Plattenlaufwerk nach jedem der vorangehenden-Ansprüche, in dem das genannte Armverriegelungssystem desweiteren eine Einkerbung (60) in dem genannten Arm und eine Sperrklinke (68) umfaßt, wobei die genannte Sperrklinke in die genannte Einkerbung eingreift und den genannten Arm verriegelt, und mechanisch mit dem genannten Flügel (70) gekoppelt ist, so daß der durch die Drehung der Platte entstehende Druck des Luftstroms auf den genannten Flügel bewirkt, daß sich die genannte Sperrklinke aus der genannten Einkerbung löst und hierdurch der genannte Arm entriegelt wird.

6. Ein Plattenlaufwerk nach jedem der vorangehenden Ansprüche, in dem das genannte Vorspannmittel eine Schraubenfeder (71) ist.

7. Ein Plattenlaufwerk nach jedem der vorangehenden Ansprüche, in dem die genannte Platte einen Landebereich (26) hat, der vom Datenspeicherbereich (22) getrennt ist, und bei dem, wenn der genannte Arm sich in dem genannten verriegelten Zustand befindet, der genannte Magnetkopf sich in dem genannten Landebereich befindet.

8. Eine Methode zum Entriegeln eines Arms in einem Plattenlaufwerk (10), das mindestens eine Datenspeicherplatte (16) umfaßt, die auf einer Spindel (14) drehbar montiert ist, einen Arm (32), der drehbar montiert ist, wobei der genannte Arm einen Magnetkopf (30) trägt, der sich zum Datentransfer über die genannte Platte bewegen kann, und ein Motormittel (140) zum Drehen der genannten Platte;
wobei das genannte Plattenlaufwerk desweiteren ein Armverriegelungssystem (60, 62) umfaßt, welches ermöglicht, daß sich der genannte Arm in einem verriegelten oder einem nicht verriegelten Zustand befindet, wobei das genannte Armverriegelungssystem ein Vorspannmittel (71) umfaßt, welches den genannten Arm in den genannten verriegelten Zustand zwingt, und einen Flügel (70), der so angeordnet ist, daß er einen Luftstrom empfängt, der durch die Drehung der genannten Platte erzeugt wird, so daß der Druck des genannten Luftstroms auf den genannten Flügel den genannten Arm in den genannten entriegelten Zustand zwingt;
wobei die genannte Methode zum Entriegeln des genannten Arms folgende Schritte umfaßt:
a) Nach Einschalten des genannten Plattenlaufwerks, Erhöhen der Umdrehungszahl der genannten Platte bis zu einer ersten vorgeschriebenen Drehzahl, so daß der Druck des durch die Umdrehung der genannten Platte erzeugten Luftstroms auf den genannten Flügel ausreicht, um den genannten Arm in den genannten entriegelten Zustand zu zwingen;
b) Feststellen, ob ein vorbestimmtes Kriterium erfüllt ist, wobei das genannte Kriterium wirksam gewährleistet, daß der genannte Arm sich im genannten entriegelten Zustand befindet;
c) Reduzieren der Umdrehungsgeschwindigkeit der genannten Platte bis auf eine zweite vorgeschriebene Umdrehungsgeschwindigkeit, so daß der genannte Datentransfer beginnen kann.

9. Eine Methode zum Entriegeln eines Arms gemäß Anspruch 8, in der das genannte vorbestimmte Kriterium darin besteht, daß seit dem genannten Einschalten des genannten Plattenlaufwerks eine vorbestimmte Zeit verstrichen ist.

## Revendications

1. Unité de disques (10) comprenant au moins un disque de mémorisation de données (16) monté sur un axe de rotation (14), un actionneur (32) tournant autour d'un axe et soutenant une tête (32) qui se déplace sur ledit disque pour exécuter le transfert des données, un dispositif moteur (140) pour faire tourner ledit disque, et un dispositif de commutation et de contrôle (100, 110) pour ledit dispositif moteur;
ladite unité de disques comprenant, de plus, un système de verrouillage d'actionneur (60, 62) qui permet de verrouiller ou déverrouiller l'actionneur, ce système de verrouillage d'actionneur comprenant un dispositif d'inclinaison unilatérale (71) qui force ledit actionneur en position verrouillée et une palette (70) placée de sorte à recevoir le flux d'air généré par la rotation du dit disque (16), en sorte que la pression exercée par le flux d'air sur ladite palette force l'actionneur en position déverrouillée;
ladite unité de disques étant caractérisée en ce que:
ledit dispositif de commutation et de contrôle (100, 110) est adapté pour assurer, après la mise sous tension, l'augmentation de la vitesse de rotation du dit disque jusqu'à une première vitesse de rotation prédéterminée, en sorte que la pression sur ladite palette (70) due au flux d'air généré par la rotation du dit disque (16) à ladite première vitesse prédéterminée soit suffisante pour forcer l'actionneur (32) en position déverrouillée, puis, lorsqu'un critère prédéterminé a été satisfait, la réduction de la vitesse de rotation jusqu'à une seconde vitesse prédéterminée à laquelle le transfert de données peut commencer.

2. Unité de disques selon la revendication 1, dans laquelle ledit critère prédéterminé consiste en ce qu'une durée prédéterminée se soit écoulée depuis la mise sous tension de l'unité de disques.

3. Unité de disques selon la revendication 2, dans laquelle ledit dispositif de commutation et de contrôle comprend :
un dispositif minuteur (104) pouvant recevoir un signal de mise en marche généré en réponse à la mise sous tension de ladite unité de disques, et générer un signal de temps de consigne écoulé lorsqu'une durée prédéterminée s'est écoulée depuis la réception du signal de mise en marche;
un dispositif de commutation du mode de vitesse (106) pouvant recevoir ledit signal de mise en marche, puis ledit signal de temps de consigne écoulé, et transmettre un signal de mode haute-vitesse après réception du dit signal de mise en marche, jusqu'à réception du dit signal de temps de consigne écoulé, et un signal de mode basse-vitesse après réception du dit signal de temps de consigne écoulé; et
un dispositif de contrôle de vitesse (110) pouvant recevoir ledit signal de mode haute-vitesse ou basse-vitesse transmis par ledit dispositif de commutation du mode de vitesse et régler la vitesse de rotation du dit dispositif moteur, et donc du dit disque, selon que le signal reçu est un signal de mode haute-vitesse ou basse-vitesse.

4. Unité de disques selon la revendication 3, dans laquelle ladite durée prédéterminée est d'environ 4,5 secondes à compter de la mise sous tension de ladite unité de disques.

5. Unité de disques selon l'une quelconque des revendications précédentes, dans laquelle ledit système de verrouillage d'actionneur comprend, de plus, une encoche (60) situées dans ledit actionneur et un cliquet (68) qui vient s'engager dans ladite encoche pour verrouiller ledit actionneur en place et qui est mécaniquement couplé à ladite palette (70), en sorte que la pression du flux d'air exercée sur ladite palette, du fait de la rotation du dit disque, tende à désengager ledit cliquet de ladite encoche pour déverrouiller ledit actionneur.

6. Unité de disques selon l'une quelconque des revendications précédentes, dans laquelle ledit dispositif d'inclinaison unilatérale est un ressort à boudin (71).

7. Unité de disques selon l'une quelconque des revendications précédentes, dans laquelle ledit disque a une zone de réception (26) distincte de la zone d'enregistrement de données (22), et dans laquelle, quand ledit actionneur est en position verrouillée, ladite tête est positionnée dans ladite zone de réception.

8. Procédé pour déverrouiller un actionneur dans une unité de disques (10) comprenant au moins un disque de mémorisation de données (16) monté sur un axe de rotation (14), un actionneur (32) tournant autour d'un axe et soutenant une tête (32) qui se déplace sur ledit disque pour exécuter le transfert des données, un dispositif moteur (140) pour faire tourner le disque;
ladite unité de disques comprenant, de plus, un système de verrouillage d'actionneur (60, 62) qui permet de verrouiller ou déverrouiller ledit actionneur, ce système de verrouillage d'actionneur comprenant un dispositif d'inclinaison unilatérale (71) qui force ledit actionneur en position verrouillée et une palette (70) placée de sorte à recevoir le flux d'air généré par la rotation du dit disque, en sorte que la pression exercée par le flux d'air sur ladite palette force l'actionneur en position déverrouillée; ledit
procédé pour déverrouiller l'actionneur comprenant le étapes consistant à :
a) après la mise sous tension, augmenter la vitesse de rotation du disque jusqu'à une première vitesse de rotation prédéterminée, en sorte que la pression sur la palette due au flux d'air généré par la rotation du disque à la première vitesse prédéterminée soit suffisante pour forcer l'actionneur en position déverrouillée;
b) déterminer qu'un critère prédéterminé a été satisfait, ce critère garantissant que l'actionneur est bien en position déverrouillée;
c) réduire la vitesse de rotation jusqu'à une seconde vitesse prédéterminée à laquelle le transfert de données peut commencer.

9. Procédé pour déverrouiller un actionneur selon la revendication 8, dans lequel ledit critère prédéterminé consiste en ce qu'une durée prédéterminée se soit écoulée depuis la mise sous tension de l'unité de disques.
